# EUROPÄISCHE PATENTSCHRIFT

(11) **EP 3 218 125 B1**
(45) Veröffentlichungstag und Bekanntmachung des Hinweises auf die Patenterteilung: **03.04.2019**
(21) Anmeldenummer: 15813233.2
(22) Anmeldetag: 10.11.2015
(51) Int. Cl.: B21D 5/02, B21D 37/04

(54) **BESCHICKUNGSVORRICHTUNG UND BIEGEPRESSE UND VERFAHREN ZUM BESCHICKEN EINER BIEGEPRESSE**
FEEDING DEVICE AND BENDING PRESS AND FEEDING PROCESS OF A BENDING PRESS
DISPOSITIF D'ALIMENTATION ET PRESSE PLIEUSE ET PROCÉDÉ D'ALIMENTATION D'UNE PRESSE PLIEUSE

(30) Priorität: 10.11.2014 DE 102014116386
(43) Veröffentlichungstag der Anmeldung: 20.09.2017
(73) Patentinhaber: TRUMPF Maschinen Austria GmbH & Co. KG., 4061 Pasching (AT)
(72) Erfinder: FISCHEREDER, Bernhard, A-4901 Ottnang am Hausruck (AT); HASELBÖCK, Alfred, A-4150 Rohrbach (AT); SPERRER, Gerhard, A-4554 Oberschlierbach (AT)
(74) Vertreter: Burger, Hannes
(86) Internationale Anmeldenummer: PCT/AT2015/050286
(87) Internationale Veröffentlichungsnummer: WO 2016/074010

(56) Entgegenhaltungen:
- EP-A2- 0 310 145
- FR-A1- 2 317 027
- JP-A- H02 268 922
- US-B1- 7 168 286

## Beschreibung

Die Erfindung bezieht sich auf eine Beschickungsvorrichtung gemäß dem Oberbegriff des Anspruch 1, eine Biegepresse gemäß dem Oberbegriff des Anspruch 15 sowie ein Verfahren zum Beschicken einer Biegepresse mit Biegewerkzeugen und/oder zum Auswechseln von einem oder mehreren in einer Biegepresse eingesetzten Biegewerkzeugen mit einer Beschickungsvorrichtung gemäß dem Oberbegriff des Anspruchs 27.

Die Automatisierung sowie die Reduktion der Taktzeiten ist ein wichtiger Aspekt im Zusammenhang mit Biegevorgängen an verschieden zu formenden Werkstücken. Ein Ansatzpunkt zur Erreichung dieses Zieles besteht darin, das Auswechseln der in einer Biegepresse eingesetzten Biegewerkzeuge mit einem eigens dafür vorgesehenen Wechsler zu automatisieren. Als nächstliegender Stand der Technik ist die JPH0584414U anzusehen. Diese Druckschrift offenbart einen Werkzeugwechsler, der ein Werkzeugdepot aus mehreren, umlaufend angeordneten Werkzeughalterungen umfasst. In jeder Werkzeughalterung wird ein Werkzeugsatz bestehend aus Oberwerkzeug und Unterwerkzeug gehalten. Um ein Werkzeug aus dem Werkzeugdepot in die Biegepresse zu transferieren, wird die entsprechende Werkzeughalterung in eine bestimmte Position gebracht und fährt eine angetriebene Kette aus. Eine am vorderen Ende der Kette angebundene mechanische Andockeinrichtung dockt an das Werkzeug an und verschiebt es in die Biegepresse. Für das Ober- und Unterwerkzeug sind jeweils gesonderte Ketten mit entsprechenden Andockeinrichtungen vorgesehen. Im eingefahrenen Zustand ist die Kette spiralförmig angeordnet. Die Kettenführung verläuft sowohl für das Unterals auch für das Oberwerkzeug gänzlich außerhalb der Werkzeughalterung. Eine solche Konstruktion ist nicht zuletzt aufgrund des Verlaufs der Kettenführung aufwendig und kostspielig. Bestehende Anlagen können nur schwer oder gar nicht nachgerüstet werden. Die Kettenführung ist anfällig für Verschmutzung und beansprucht gerade in jenem Bereich, der für eine optimale Bedienung und Werkstückpositionierung zugänglich und frei von Hindernissen sein sollte, übermäßig viel Raum.

Die DE3326067A1 offenbart eine Formwechselvorrichtung für Formmaschinen, insbesondere Spritzgussmaschinen. Die Formhälftenpaare werden auf sogenannten Rollenwagen bzw. Rollentransfervorrichtungen in bzw. aus der Spritzgussmaschine gefahren. Mittels einer Zug-Druck-Vorrichtung werden die Formhälftenpaare von den Rollenwagen auf die Rollentransfervorrichtungen (und umgekehrt) überführt. Die Zug-Druck-Vorrichtung umfasst einen Antrieb und eine Stahlkette, die mittels des Antriebs in eine Zug-Druck-Bewegung setzbar ist. Am vorderen Ende der Stahlkette ist ein Haken vorgesehen, um an das Formhälftenpaar anzukoppeln. Diese Konstruktion unterscheidet sich stark von einer Biegepresse; eine Implemetierung dieses Systems in eine Biegepresse bedeutet nicht nur hohen Aufwand, sondern erfordert eine grundlegend andere Konzeption der Biegepresse.

Die JPS57181725A offenbart eine automatische Werkzeugwechseleinrichtung für eine Biegepresse. Ein Werkzeugspeicher wird durch eine Trommel größeren Durchmessers und eine Trommel kleineren Durchmessers gebildet. Zum Beschicken der Biegepresse mit einem bestimmten Werkzeug wird zunächst die Trommel in eine entsprechende Drehstellung gebracht und anschließend das ausgewählte Werkzeug mittels eines Schlittens entlang einer eigens dafür vorgesehenen Führung in die Biegepresse befördert. Als Zug-Druck-Mittel dient auch hier eine angetriebene Kette. Die Anordnung der Führung ist auch hier ungünstig gewählt. Beim Vorsehen von verfahrbaren Hinteranschlägen sind die Möglichkeiten aufgrund des Platzmangels stark begrenzt und Kollisionen zu befürchten. Aufgrund der schweren Zugänglichkeit der Führungen sind Einbau, Wartung und Reparatur sehr aufwendig. Ein Nachrüsten bestehender Anlagen mit einem Wechselsystem ist nicht möglich.

Die JPS60244426A offenbart einen Werkzeugwechsler für eine Biegemaschine, enthält jedoch in Bezug auf die detaillierte Konstruktion des Werkzeugwechslers keine konkrete Lehre.

Die EP0310145A2 offenbart eine Biegemaschine, bei der die Randsegmente einer oberen Formsegmentgruppe mittels einer Gewindestange in entgegengesetzte Richtungen bewegbar sind. Die Randsegmente weisen jeweils einen Hauptkörper und einen mit diesem verbundenen Formsegmentteil auf. Der Formsegmentteil ist relativ zum Hauptkörper um eine horizontale Achse schwenkbar gelagert. Mittels dieser Randsegmente sowie einer bestimmten Anzahl von dazwischen angeordneten Formsegmenten kann die effektive Länge des oberen Werkzeuges verändert und somit an die Breite einer Blechplatte angepasst werden.

Die DE2627972A1 offenbart eine Biegemaschine, bei der das Werkzeug in seiner Länge veränderbar ist. Dabei sind mehrere Werkzeugstücke zu einer Werkzeugkette gelenkig verbunden. Die Werkzeugstücke sind an einem Halter gleitend geführt und um eine Umlenkrolle herumgeführt. Zur Veränderung der Werkzeuglänge kann die Werkzeugkette eingezogen bzw. herausbewegt werden.

Die JPH02268922A offenbart eine Biegepresse mit einer oberen und unteren Werkzeughalterung, die abnehmbar am oberen bzw. unteren Maschinenteil angeordnet sind. Um einen schnellen Wechsel von Formwerkzeugen zu ermöglichen, werden - jeweils für Oberwerkzeuge und Unterwerkzeuge - sogenannte Supportarme, die jeweils Unterarme aufweisen, bereitgestellt.

Die US7168286B1 offenbart die Möglichkeit, ältere Formwerkzeuge für neue Maschinen nutzbar zu machen, indem auf den Befestigungsteil des älteren Werkzeuges ein entsprechend ausgebildeter Adapter aufgesetzt wird, dessen Außen- bzw. Oberseite aber mit der Werkzeughalterung von neuen Maschinen kompatibel ist.

Die sich aus dem Stand der Technik ergebenden Nachteile im Hinblick auf einen Werkzeugwechsler betreffen insbesondere die aufwendige und kostspielige Konstruktion, die für die Zuführung der Biegewerkzeuge erforderlich ist. Die z.T. exponierte Anordnung der (Ketten)Führungen erfordert viel Raum und ist anfällig für äußere Einflüsse, wie Verschmutzung, Stöße, Kollisionen mit anderen bewegbaren Bauteilen, wie z.B. Anschlägen, Sensoren, etc. Besonders nachteilig wirkt sich aus, dass bestehende Anlagen nicht mit den Werkzeugwechslern des Standes der Technik kombinierbar sind bzw. dafür aufwendige Umbauarbeiten erforderlich wären.

Das Ziel der Erfindung besteht darin, eine Biegepresse und eine Beschickungsvorrichtung bereitzustellen, mit der die im Stand der Technik auftretenden Probleme gelöst werden können und die sich insbesondere durch platzsparende Bauweise und Nachrüstbarkeit bestehender Biegepressen bzw. -anlagen auszeichnen. Die Transfereinrichtung soll zwischen Biegepresse und Beschickungsvorrichtung möglichst geschützt verlaufen und vor Verschmutzung und anderen äußeren Einflüssen verschont bleiben. Wartung, Reparatur und Austausch soll einfach von statten gehen.

Dieses Ziel wird mit einer Biegepresse gemäß dem Anspruch 15 und einer Beschickungsvorrichtung gemäß dem Anspruch 1 gelöst.

Durch diese Maßnahme wird eine zuverlässige Führung der Transfereinrichtung ermöglicht. Die Führungsstruktur in der Schiene ist ausgebildet, um die Transfereinrichtung in der Schiene zu halten. Die innerhalb der Schiene ausgebildete Führungsstruktur besitzt zusätzlich zur Führungsfunktion entlang der Längserstreckung der Schiene eine Haltefunktion, indem sie die Transfereinrichtung in (oder innerhalb) der Schiene hält. Die Transfereinrichtung ist entlang der Führungsstruktur (d.h. parallel zur Längserstreckung der Schiene) verschiebbar und in der Richtung senkrecht zur Längserstreckung der Schiene (d.h. in der Richtung vom Schieneninneren zur Schienenöffnung hin) durch die Führungsstruktur gehalten. Die Führungsstruktur verhindert somit, dass die Transfereinrichtung aus der Schiene fällt bzw. herausspringt.

Ein wesentlicher Vorteil der Erfindung im Hinblick auf den eingangs erwähnten Stand der Technik besteht darin, dass für die Transfereinrichtung keine gesonderte Schiene bzw. Führung vorgesehen werden muss, wodurch der Konstruktionsaufwand erheblich reduziert werden kann. Die in der Biegepresse und/oder in der Beschickungsvorrichtung eingesetzten Biegewerkzeuge werden in derselben Schiene gehalten, in der auch die Transfereinrichtung bzw. ein Abschnitt der Transfereinrichtung eingesetzt bzw. gehalten ist.

Besonders bevorzugt wird, wenn zur Führung der Transfereinrichtung bereits bestehende Führungsstrukturen innerhalb der Schiene verwendet werden können. Damit lässt sich das erfindungsgemäße Prinzip auch auf bestehende Anlagen ohne bzw. mit nur geringfügigen Adaptierungen anwenden.

Das erfindungsgemäße Prinzip ist sowohl auf Biegepressen als auch auf Beschickungsvorrichtungen anwendbar. Biegepressen könnten aber auch - unabhängig vom Vorhandensein einer Beschickungsvorrichtung - eine angetriebene Transfereinrichtung aufweisen, die zum Verschieben bzw. exakten Positionieren eines Biegewerkzeuges innerhalb der Werkzeughalterung dient. Bei einer kombinierten Anordnung, d.h. bei einer an eine Biegepresse angekoppelten Beschickungsvorrichtung können die Biegewerkzeuge von der Werkzeughalterung der Beschickungsvorrichtung zu der Werkzeughalterung der Biegepresse verschoben werden und umgekehrt.

Die Biegepresse bzw. die Beschickungsvorrichtung umfassen vorzugsweise eine Steuereinrichtung, durch die der Vorgang des Verschiebens, des Beschickens und/oder Wechseln der Werkzeuge automatisiert ist. Zu diesem Zweck ist die Steuereinrichtung auch mit dem Antrieb der Transfereinrichtung (sowie gegebenenfalls anderer Antriebe der Beschickungsvorrichtung z.B. für einen gegebenenfalls vorhandenen bewegbaren bzw. verfahrbaren Biegewerkzeugspeicher) verbunden.

Eine bevorzugte Ausführungsform zeichnet sich dadurch aus, dass das Biegewerkzeug in der Schiene durch dieselbe Führungsstruktur gehalten wird, durch die der zumindest eine Abschnitt der Transfereinrichtung geführt ist. Dies ist besonders vorteilhaft, da für die Transfereinrichtung keine gesonderte Führungsstruktur vorgesehen werden muss. Das Biegewerkzeug wird beispielsweise durch vom Schaft des Biegewerkzeuges abragende Haltemittel, wie z.B. Stiften, Pins oder Leisten gehalten. Die Haltemittel ragen in die Führungsstruktur, wodurch das Biegewerkzeug in der Schiene gehalten wird. Die Haltemittel können auch beweglich sein und z.B. durch ein Betätigungselement des Biegewerkzeuges (sog. Sicherheitsstifte) von einer haltende in eine freigebende Stellung bewegt werden. Dies ermöglicht das Einsetzen der Biegewerkzeuge in einer Richtung quer zur Längserstreckung der Schiene.

Eine bevorzugte Ausführungsform zeichnet sich dadurch aus, dass die Führungsstruktur durch eine Verbreiterung des Innenprofils der Schiene in Bezug auf die Schienenöffnung gebildet wird. Die Verbreiterung kann z.B. durch gegenüberliegende Nuten in den Seitenwänden der Schiene gebildet werden. Die Transfereinrichtung greift in diese Verbreiterung ein, wodurch effektiv verhindert wird, dass die Transfereinrichtung aus der Schiene fällt.

Eine bevorzugte Ausführungsform zeichnet sich dadurch aus, dass die Führungsstruktur zumindest eine, in einer Innenwand der Schiene verlaufende Nut umfasst. Dadurch ist die Lage der Transfereinrichtung innerhalb der Schiene genau definiert, wodurch die Bewegung der Transfereinrichtung zuverlässig und reibungsarm ablaufen kann.

Eine bevorzugte Ausführungsform zeichnet sich dadurch aus, dass die Führungsstruktur durch zumindest zwei einander gegenüberliegende Nuten gebildet wird, die in gegenüberliegenden Innenwänden der Schiene ausgebildet sind. Dies ermöglicht eine stabile und beständige Lagerung innerhalb der Schiene.

Eine bevorzugte Ausführungsform zeichnet sich dadurch aus, dass die Führungsstruktur durch diskrete Führungselemente gebildet ist, die von einer Innenwand ins Innere der Schiene vorragen und in Längsrichtung der Schiene verteilt angeordnet sind, wobei vorzugsweise die Biegepresse und/oder die Beschickungsvorrichtung eine Klemmeinrichtung zum Klemmen des Biegewerkzeuges in der Schiene aufweist und die diskreten Führungselemente durch antreibbare Klemmelemente der Klemmeinrichtung gebildet sind. Bei dieser Ausführungsform können bestehende Strukturen für die Führung und fürs Halten der Transfereinrichtung genutzt werden, wodurch sich eine besonders kostengünstige Variante ergibt.

Bevorzugt sind einzelne Klemmelemente oder Gruppen von Klemmelementen unabhängig von anderen Klemmelementen steuerbar, sodass Klemmelemente der Klemmeinrichtung nur bereichsweise in das Innere der Schiene ausgefahren sind. Sie können daher derart gesteuert werden, dass Klemmelemente im Bereich der Transfereinrichtung temporär ausgefahren sind (und dort eine Führung für die Transfereinrichtung bilden), während Klemmelemente im Bereich eines (zu bewegenden) Biegewerkzeuges eingefahren sind. Erst wenn das Biegewerkzeug positioniert ist, werden die Klemmelemente in die klemmende (d.h. ausgefahrene) Stellung bewegt.

Eine bevorzugte Ausführungsform zeichnet sich dadurch aus, dass der durch die Führungsstruktur geführte Abschnitt der Transfereinrichtung ein längliches, vorzugsweise flexibles Zug- und/oder Druckübertragungsmittel ist, insbesondere ein Band, ein Seil, ein Stab oder eine Kette. Die Transfereinrichtung kann dadurch gewichtsarm und platzsparend konzipiert werden. Das Übertragungsmittel kann zur Übertragung von Zugkräften oder Druckkräften oder Zug- und Druckkräften ausgebildet sein. Wenn die Beschickung bzw. das Wechseln der Biegewerkzeuge nur von einem Ende der Schiene aus erfolgt, kommt ein Zug- und Druckübertragungsmittel zum Einsatz.

Vorzugsweise verläuft auf dem oder innerhalb des Zug- und/oder Druckübertragungsmittel(s) zumindest eine Leitung (Kabel, Druck- oder Unterdruckleitungen, Medienleitungen, etc.). Diese kann zur Versorgung einer betätigbaren Kupplung zur Anbindung eines Biegewerkzeuges vorgesehen sein.

Eine bevorzugte Ausführungsform zeichnet sich dadurch aus, dass das Zug- und/oder Druckübertragungsmittel breiter ist als die Schienenöffnung und/oder als der in die Schiene ragende Abschnitt des Biegewerkzeuges. Dadurch wird ein Herausfallen des Zug- und/oder Druckübertragungsmittels aus der Schiene zuverlässig und mit einfachen Mitteln verhindert.

Eine bevorzugte Ausführungsform zeichnet sich dadurch aus, dass das in der Führungsstruktur geführte Zug- und/oder Druckübertragungsmittel zu einem überwiegenden Teil, vorzugsweise zur Gänze innerhalb der Schiene verläuft. Das Zug- und/oder Druckübertragungsmittel ist somit von der Schiene umgeben bzw. ist - vorzugsweise vollständig - innerhalb des Innenprofils der Schiene angeordnet. Das Zug- und/oder Druckübertragungsmittel (z.B. ein Band oder eine Kette) ist dadurch bestmöglich vor äußeren Einflüssen (Verschmutzung, mechanischen Einwirkungen) geschützt. Außerdem ist kein zusätzlicher Platzbedarf für das Zug- und/oder Druckübertragungsmittel erforderlich.

Eine bevorzugte Ausführungsform zeichnet sich dadurch aus, dass die Transfereinrichtung ein Shuttle umfasst, das durch die in der Schiene ausgebildete Führungsstruktur geführt ist. Ein Shuttle erleichtert die Anbindung an das Biegewerkzeug und kann zumindest ein funktionelles Bauteil, wie eine Kupplung, einen Sensor (zur Detektion eines Biegewerkzeuges), eine Beleuchtungseinrichtung, etc. umfassen.

Eine bevorzugte Ausführungsform zeichnet sich dadurch aus, dass das Shuttle an einem seiner Enden mit dem Zug- und/oder Druckübertragungsmittel verbunden ist und an seinem anderen Ende eine lösbare Kupplung zum Anbinden eines Biegewerkzeuges aufweist, wobei vorzugsweise die Kupplung eine mechanische Kupplung, eine magnetische Kupplung oder Ansaugvorrichtung ist. Dadurch kann vor bzw. während des Transfers eine zuverlässige Anbindung an das Biegewerkzeug hergestellt werden.

Eine bevorzugte Ausführungsform zeichnet sich dadurch aus, dass das Shuttle selbstfahrend ausgebildet ist, wobei der Antrieb in oder an dem Shuttle angeordnet ist. Die Transfereinrichtung kann auf diese Weise besonders bauteilsparend konstruiert werden. Die Ansteuerung des Shuttle könnte drahtgebunden, aber auch per Funk erfolgen.

Eine bevorzugte Ausführungsform ist durch eine Vielzahl von Werkzeughalterungen gekennzeichnet, die einen Biegewerkzeugspeicher bilden, wobei vorzugsweise die Werkzeughalterungen einzeln oder in einem zusammenwirkenden Verbund relativ zur Transfereinrichtung bewegbar sind. Dadurch können unterschiedliche Werkzeughalterungen von derselben Transfereinrichtung ,angefahren' bzw. durchfahren werden.

Eine bevorzugte Ausführungsform zeichnet sich dadurch aus, dass die Beschickungsvorrichtung ein Werkzeugwechsler zum Auswechseln von einem oder mehreren in einer Biegepresse eingesetzten Biegewerkzeugen ist. In dieser Variante erfolgt nicht nur eine Beschickung der Biegepresse mit Biegewerkzeugen, sondern es erfolgt auch eine Rückstellung von (nicht mehr gebrachten) Biegewerkzeugen von der Biegepresse in die Beschickungsvorrichtung bzw. den Werkzeugwechsler. Der Werkzeugwechsler ist automatisiert, d.h. mit einer Steuereinrichtung verbunden, die die Verfahrbewegung der Transfereinrichtung bzw. die Betätigung der Kupplung sowie gegebenenfalls die Bewegung des Biegewerkzeugspeichers relativ zur Transfereinrichtung steuert.

Eine bevorzugte Ausführungsform zeichnet sich dadurch aus, dass der Biegewerkzeugspeicher in Form eines Regales, einer Drehscheibe, einer Schiebebühne, einer Trommel, eines Paternosteraufzuges und/oder eines oder mehrerer Racks ausgebildet ist. Dadurch kann eine Vielzahl an verschiedenen Biegewerkzeugen zur Verfügung gestellt bzw. gewechselt werden.

Eine bevorzugte Ausführungsform ist durch zumindest zwei Werkzeughalterungen gekennzeichnet, wobei eine Werkzeughalterung die Oberwerkzeughalterung und die andere Werkzeughalterung die Unterwerkzeughalterung bildet.

Die Schiene der Unterwerkzeughalterung kann ein einfacheres Innenprofil aufweisen als jene der Oberwerkzeughalterung. In der Schiene der Unterwerkzeughalterung kann z.B. bereits der Schienenboden zusammen mit den Seitenwänden die oben erwähnte Führungsfunktion und Haltefunktion - letztere kommt durch dadurch zustande, dass die Transfereinrichtung durch die Schwerkraft gegen den Schienenboden gedrückt wird (d.h. die durch die zumindest eine Innenwand ausgebildete Führungsstruktur weist im Zusammenspiel mit der Schwerkraft die Haltefunktion auf) - gewährleisten. So kann das Schienen-Innenprofil der Unterwerkzeughalterung z.B. auch nur einen einfachen rechteckigen Querschnitt aufweisen.

Die Führungsstruktur in der Schiene der Oberwerkzeughalterung ist ausgebildet, um den zumindest einen Abschnitt der Transfereinrichtung in der Schiene zu halten, d.h. gegen ein Herausfallen zu sichern. Mit anderen Worten: die Führungsstruktur in der Schiene der Oberwerkzeughalterung wirkt der Schwerkraft entgegen.

Eine bevorzugte Ausführungsform zeichnet sich dadurch aus, dass die Transfereinrichtung, die in der Schiene einer der Werkzeughalterungen geführt ist, eine Kupplung zum Anbinden eines in der anderen (gegenüberliegenden) Werkzeughalterung eingesetzten Biegewerkzeuges aufweist. Mit dieser Ausführungsform kann somit ein Biegewerkzeug gefasst bzw. gehalten werden, das in der gegenüberliegenden Werkzeughalterung eingesetzt ist. Es handelt sich hier um einen ,werkzeughalterung-übergreifenden' Transfer.

Bevorzugt umfasst die Biegepresse und/oder die Beschickungsvorrichtung
- zumindest zwei Werkzeughalterungen (z.B. Unterwerkzeughalterungen), die in Richtung quer zur Längsrichtung ihrer Schienen nebeneinander angeordnet sind, wobei sich ihre Schienen in dieselbe Richtung öffnen, und
- zumindest eine weitere Werkzeughalterung (z.B. Oberwerkzeughalterung), deren Schiene der Schiene einer der nebeneinander angeordneten Werkzeughalterungen gegenüberliegt (d.h. zugewandt) ist.
Vorzugsweise ist zumindest eine der Werkzeughalterungen - relativ zu einer anderen Werkzeughalterung - in einer Richtung verschiebbar, die quer (vorzugsweise im Wesentlichen senkrecht) zur Längsrichtung ihrer Schiene und quer (vorzugsweise im Wesentlichen senkrecht) zur Richtung, in die sich ihre Schiene öffnet, steht. Dadurch kann eine der beiden nebeneinander liegenden Werkzeughalterungen als 'Überholgleis' oder 'Abstellgleis' dienen. Im Zusammenhang mit der vorhergehenden Ausführungsform, bei der die Transfereinrichtung eine Kupplung für Biegewerkzeuge in der gegenüberliegenden Werkzeughalterung aufweist, können komplexe Umrüstungen von Biegewerkzeugen auf einfache Weise erfolgen. Bevorzugt sind die beiden nebeneinander angeordneten Werkzeughalterungen (z.B. Unterwerkzeughalterungen) auf einer gemeinsamen Plattform (z.B. Tisch) gelagert oder bilden eine gemeinsame Plattform. Dabei ist die Plattform mit beiden Werkzeughalterungen verschiebbar. Bevorzugt umfasst die Biegepresse und/oder die Beschickungsvorrichtung zumindest zwei, vorzugsweise unabhängig voneinander ansteuerbare Transfereinrichtungen. Dabei kann eine Transfereinrichtung der Oberwerkzeughalterung und eine der Unterwerkzeughalterung zugeordnet sein, wodurch Ober- und Unterwerkzeuge gleichzeitig positioniert und/oder gewechselt werden können. Bei einer Ausbildung mit Zug- und/oder Druckübertragungsmittel verlaufen diese zumindest abschnittsweise parallel.

Das Ziel der Erfindung wird auch durch Verfahren zum Beschicken einer Biegepresse mit Biegewerkzeugen und/oder zum Auswechseln von einem oder mehreren in einer Biegepresse eingesetzten Biegewerkzeugen mit einer Beschickungsvorrichtung gemäß Anspruch 27 gelöst.

Eine bevorzugte Ausführungsform zeichnet sich dadurch aus, dass das Biegewerkzeug in der Schiene der Werkzeughalterung der Biegepresse und/oder in der Schiene der Werkzeughalterung der Beschickungsvorrichtung durch dieselbe Führungsstruktur gehalten wird, durch die der zumindest eine Abschnitt der Transfereinrichtung bewegt wird.

Vorzugsweise weisen die Schiene der Biegepressen-Werkzeughalterung und die (daran angekoppelte) Schiene der Beschickungsvorrichtung-Werkzeughalterung die gleiche Führungsstruktur, vorzugsweise das gleiche Innenprofil auf. Die Führungsstruktur der Biegepressen-Schiene geht - ohne Profiländerung - in die Führungsstruktur der Beschickungsvorrichtungs-Schiene über, wodurch ein reibungsloser Übergang der Transfereinrichtung erfolgen kann.

Zum besseren Verständnis der Erfindung wird diese anhand der nachfolgenden Figuren näher erläutert.

Es zeigen jeweils in stark vereinfachter, schematischer Darstellung:
- Fig. 1: eine erfindungsgemäße Biegepresse;
- Fig. 2 bis 4: verschiedene Varianten eines Schieneninnenprofils mit darin verlaufender Transfereinrichtung;
- Fig. 5: ein Schieneninnenprofil mit darin verlaufendem Shuttle;
- Fig. 6: eine in der Oberwerkzeughalterung verlaufende Transfereinrichtung aus Zug- und/oder Druckübertragungsmittel und Shuttle, das mittels einer Kupplung an ein Oberwerkzeug angekoppelt ist;
- Fig. 7: eine Anordnung aus einer Biegepresse und einer Beschickungsvorrichtung;
- Fig. 8: eine Variante einer Transfereinrichtung;
- Fig. 9: eine Variante einer Biegepresse bzw. einer Beschickungsvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus der Biegepresse bzw. Beschickungsvorrichtung diese bzw. deren Bestandteile teilweise unmaßstäblich und/oder vergrößert und/oder verkleinert dargestellt wurden.

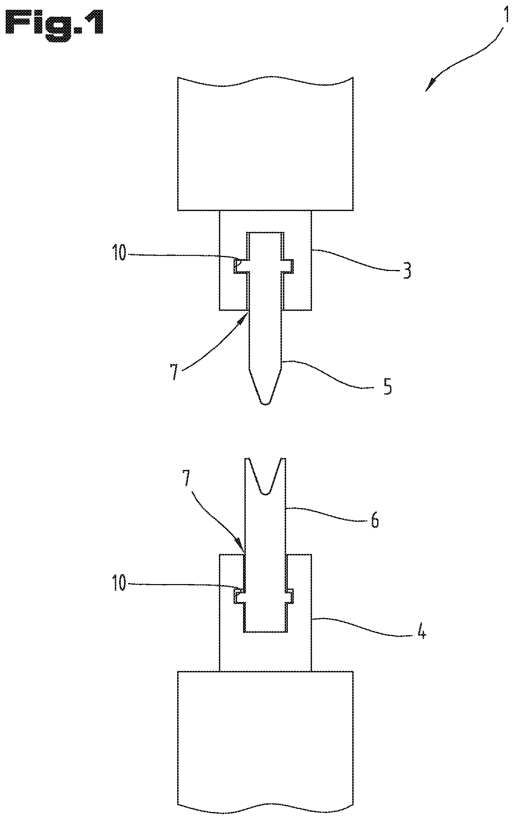

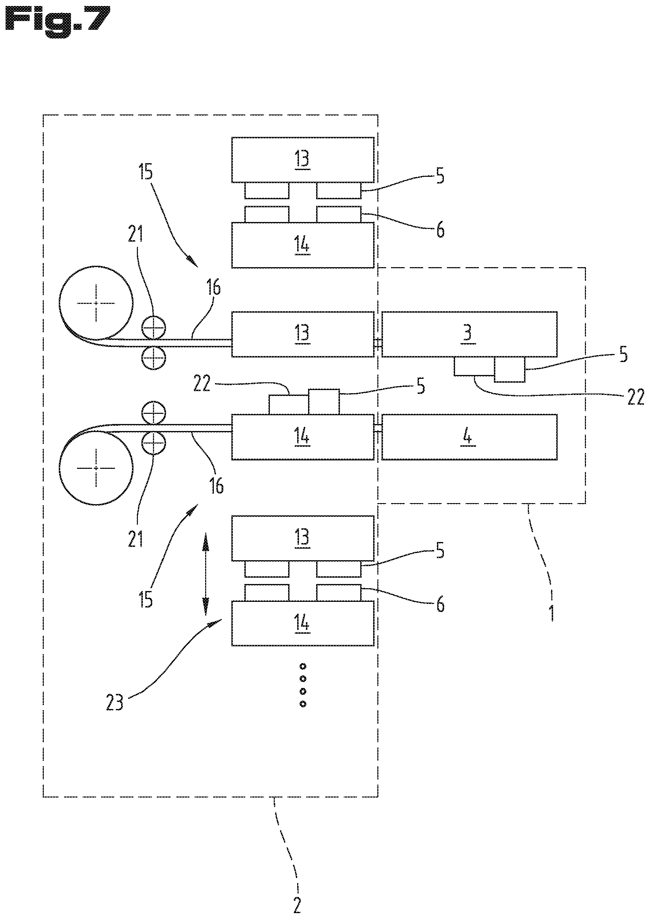

Fig. 1 zeigt eine Biegepresse 1, wobei an dieser Stelle angemerkt sei, dass eine Beschickungsvorrichtung 2 (Fig. 7) zum Beschicken einer Biegepresse 1 mit Biegewerkzeugen 5, 6 gleichermaßen ausgebildet sein kann und dass die folgenden Ausführungen gleichermaßen auch auf eine Beschickungsvorrichtung 2 zutreffen können.

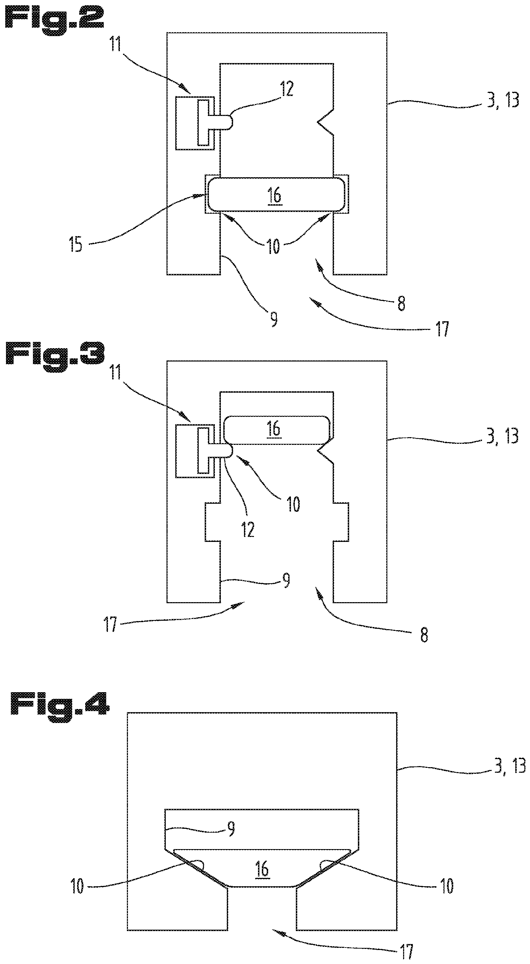

Aus Fig. 1, 6 bzw. 7 ist in Kombination mit Fig. 2 ist zu sehen, dass die Biegepresse 1 und/oder die Beschickungsvorrichtung 2 zumindest eine Werkzeughalterung 3, 4 bzw. 13, 14 mit einer ein Innenprofil 8 aufweisenden Schiene 7 zum Aufnehmen und Verschieben eines Biegewerkzeuges 5, 6 aufweist.

Fig. 2 zeigt, dass zumindest eine Innenwand 9 der Schiene 7 eine sich in Längsrichtung der Schiene 7 erstreckende Führungsstruktur 10 ausbildet.

Eine durch einen Antrieb 21 (Fig. 7) entlang der Längserstreckung der Schiene 7 verfahrbare Transfereinrichtung 15 dient zum Verschieben eines Biegewerkzeuges 5, 6 innerhalb der Werkzeughalterung 3, 4 bzw. 13, 14 und/oder zwischen der Werkzeughalterung 13, 14 der Beschickungsvorrichtung 2 und einer Werkzeughalterung 3, 4 der Biegepresse 1.

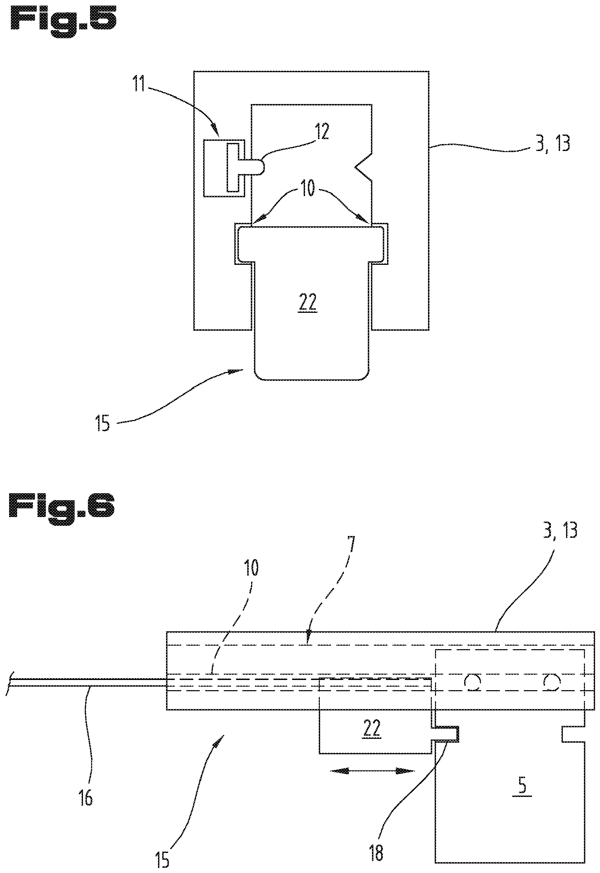

Der durch die Führungsstruktur 10 geführte Abschnitt der Transfereinrichtung 15 ist ein längliches, vorzugsweise flexibles Zug- und/oder Druckübertragungsmittel 16 (Fig. 6). Dieses ist in den vorliegenden Darstellungen als Band ausgebildet, kann jedoch ebenso als Seil, Stab oder Kette ausgebildet sein.

Aus Fig. 2 bzw. Fig. 6 ist zu sehen, dass zumindest ein Abschnitt der Transfereinrichtung 15 durch die in der Schiene 7 ausgebildete Führungsstruktur 10 geführt ist.

In der Ausführungsform der Fig. 6 wird das Biegewerkzeug 5 in der Schiene 7 durch dieselbe Führungsstruktur 10 gehalten, durch die der zumindest eine Abschnitt der Transfereinrichtung 15 geführt ist.

Die Führungsstruktur 10 wird in den Ausführungsformen gemäß Fig. 2 und 4 durch eine Verbreiterung des Innenprofils 8 der Schiene 7 in Bezug auf die Schienenöffnung 17 gebildet. Das Zug- und/oder Druckübertragungsmittel 16 ist dabei breiter als die Schienenöffnung 17 und/oder als der in die Schiene 7 ragende Abschnitt des Biegewerkzeuges 5, 6.

In Fig. 2 umfasst die Führungsstruktur 10 zwei, in gegenüberliegenden Innenwänden 9 der Schiene 7 verlaufende Nuten umfasst. Die Nuten sind einander gegenüberliegend angeordnet und das Zug- und/oder Druckübertragungsmittel 16 ist in die Nuten eingesetzt.

In Fig. 4 wird die Führungsstruktur durch einen keilförmigen Abschnitt des Innenprofils gebildet, auf dem das Zug- und/oder Druckübertragungsmittel 16 aufliegt.

In Fig. 3 wird die Führungsstruktur 10 durch diskrete Führungselemente gebildet, die von einer Innenwand 9 ins Innere der Schiene 7 vorragen und in Längsrichtung der Schiene 7 verteilt angeordnet sind. In der dargestellten Ausführungsform weist die Biegepresse 1 und/oder die Beschickungsvorrichtung 2 eine Klemmeinrichtung 11 zum Klemmen des Biegewerkzeuges 5, 6 in der Schiene 7 auf. Dabei sind die diskreten Führungselemente durch antreibbare Klemmelemente 12 der Klemmeinrichtung 11 gebildet. Die Klemmelemente 12 sind von einer freigebenden (d.h. eingefahrenen) Stellung in eine das Biegewerkzeug klemmende (d.h. ausgefahrene) Stellung bringbar, z.B. durch eine Druckbeaufschlagungs-Einrichtung (angedeutet durch einen zylinder- bzw. kolbenförmige Ausbildung in Fig. 3).

Die Ausführungsformen der Fig. 2, 3, 4 und 6 zeigen, dass das in der Führungsstruktur 10 geführte Zug- und/oder Druckübertragungsmittel 16 zur Gänze innerhalb der Schiene 7 verläuft.

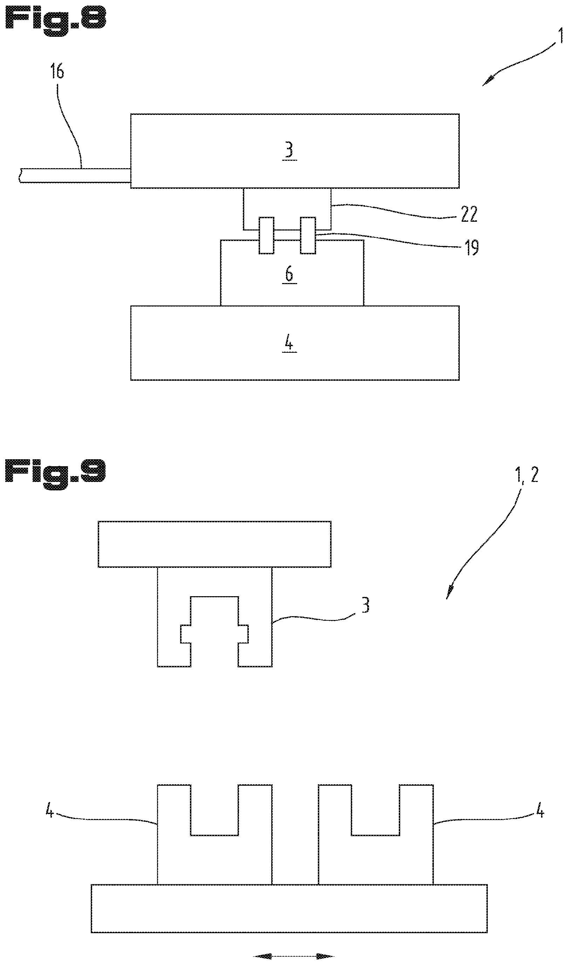

Die Fig. 5, 6 und 7 zeigen, dass die Transfereinrichtung 15 ein Shuttle 22 umfasst, das durch die in der Schiene 7 ausgebildete Führungsstruktur 10 geführt ist. Das Shuttle 22 ist an einem seiner Enden mit dem Zug- und/oder Druckübertragungsmittel 16 verbunden und weist an seinem anderen Ende eine lösbare Kupplung 18 zum Anbinden eines Biegewerkzeuges 5, 6 auf. Die (in Fig. 6 nur schematisch dargestellte) Kupplung 18 kann eine mechanische Kupplung, eine magnetische Kupplung oder eine Ansaugvorrichtung sein. Sie kann z.B. derart ausgebildet sein, wie in der JP0584414U, insbesondere dort in Fig. 8, offenbart. Die Kupplung kann eine kraftschlüssige und/oder formschlüssige Verbindung mit dem Biegewerkzeug herstellen.

Das Shuttle 22 könnte in einer alternativen Variante auch selbstfahrend ausgebildet sein; der Antrieb zum Verfahren des Shuttles 22 kann in diesem Fall in oder an dem Shuttle 22 angeordnet sein.

Fig. 7 zeigt eine Anordnung einer Biegepresse 1 und einer daran gekoppelten Beschickungseinrichtung 2 zum Beschicken der Biegepresse 1 mit Biegewerkzeugen 5, 6. Vorzugsweise weist die Schiene 7 der Biegepressen-Werkzeughalterung 3, 4 und die daran angekoppelte Schiene 7 der Beschickungsvorrichtungs-Werkzeughalterung 13, 14 die gleiche Führungsstruktur 10, vorzugsweise das gleiche Innenprofil 8 auf. D.h. der Querschnitt durch die Führungsstruktur bzw. das Innenprofil sind sowohl biegepressen-seitig als auch beschickungsvorrichtungs-seitig gleich ausgebildet.

Fig. 7 zeigt eine Vielzahl von Werkzeughalterungen 13, 14, die einen Biegewerkzeugspeicher 23 der Beschickungsvorrichtung 2 bilden. Wie durch den Doppelpfeil angedeutet können die Werkzeughalterungen 13, 14 einzeln oder in einem zusammenwirkenden Verbund relativ zur Transfereinrichtung 15 bewegbar sein, sodass eine Transfereinrichtung 15 in unterschiedliche Werkzeughalterungen einfahren und die dort gelagerten Biegewerkzeuge in die Biegepresse 1 verschieben kann. Die Beschickungsvorrichtung 2 ist in diesem Fall ein Werkzeugwechsler zum Auswechseln von einem oder mehreren in einer Biegepresse 1 eingesetzten Biegewerkzeugen 5, 6. Der Biegewerkzeugspeicher 23 kann in Form eines Regales, einer Drehscheibe, einer Schiebebühne, einer Trommel, eines Paternosteraufzuges und/oder eines oder mehrerer Racks ausgebildet ist.

Wie anhand der Figuren zu sehen umfasst die Biegepresse 1 und/oder die Beschickungsvorrichtung 2 zumindest zwei Werkzeughalterungen 3, 4 bzw. 13, 14, wobei eine Werkzeughalterung 3 bzw. 13 die Oberwerkzeughalterung und die andere Werkzeughalterung 4 bzw. 14 die Unterwerkzeughalterung bildet.

Die Biegepresse 1 bzw. Beschickungsvorrichtung 2 umfasst gemäß Fig. 7 zumindest zwei, vorzugsweise unabhängig voneinander ansteuerbare Transfereinrichtungen 15, wobei eine Transfereinrichtung 15 der Oberwerkzeughalterung 3 bzw. 13 und eine Transfereinrichtung 15 der Unterwerkzeughalterung 4 bzw. 14 zugeordnet ist.

In der Ausführungsform gemäß Fig. 8 ist die Transfereinrichtung 15, die in der Schiene 7 einer der Werkzeughalterungen (hier in der Oberwerkzeughalterung 3) geführt ist, eine Kupplung 19 zum Anbinden eines in der anderen Werkzeughalterung (hier in der Unterwerkzeughalterung 4) eingesetzten Biegewerkzeuges 6 auf. Die Kupplung 19 kann ähnlich oder auf ähnlichem Prinzip beruhen wie die anhand der Kupplung 18 beschriebenen Varianten.

Gemäß Fig. 9 weist die Biegepresse 1 und/oder die Beschickungsvorrichtung 2 zumindest zwei Werkzeughalterungen 4 (hier: für Unterwerkzeuge) auf, die in Richtung quer zur Längsrichtung ihrer Schienen 7 nebeneinander angeordnet sind, wobei sich ihre Schienen 7 in dieselbe Richtung öffnen. Eine weitere Werkzeughalterung 3 (hier: für Oberwerkzeuge) ist vorgesehen, deren Schiene 7 der Schiene 7 einer der nebeneinander angeordneten Werkzeughalterungen 4 gegenüberliegt.

Die beiden nebeneinander angeordneten Werkzeughalterungen 4 sind auf einer gemeinsamen Plattform gelagert (bzw. könnten alternativ eine gemeinsame Plattform bilden). Die Plattform ist relativ zur oberen Werkzeughalterung 3 in einer Richtung verschiebbar, die quer bzw. senkrecht zur Längsrichtung ihrer Schiene 7 und quer bzw. senkrecht zur Richtung, in die sich ihre Schiene 7 öffnet, steht.

Wie bereits eingangs erwähnt wird bei einem Verfahren zum Beschicken einer Biegepresse 1 mit Biegewerkzeugen 5, 6 und/oder zum Auswechseln von einem oder mehreren in einer Biegepresse 1 eingesetzten Biegewerkzeugen 5, 6 eine automatisierte Beschickungsvorrichtung 2 verwendet. Dabei werden ein oder mehrere Biegewerkzeuge 5, 6 durch eine Transfereinrichtung 15 zwischen der Werkzeughalterung 13, 14 der Beschickungsvorrichtung 2 und der Werkzeughalterung 3, 4 der Biegepresse 1 verschoben. Das Biegewerkzeug 5, 6 ist dabei in der Schiene 7 der Werkzeughalterung 3, 4 der Biegepresse 1 und/oder in der Schiene 7 der Werkzeughalterung 13, 14 der Beschickungsvorrichtung 2 durch dieselbe Führungsstruktur 10 gehalten, durch die der zumindest eine Abschnitt der Transfereinrichtung 15 bewegt wird.

### Bezugszeichenaufstellung

- 1: Biegepresse
- 2: Beschickungsvorrichtung
- 3: Werkzeughalterung
- 4: Werkzeughalterung
- 5: Biegewerkzeug (Oberwerkzeug)

- 6: Biegewerkzeug (Unterwerkzeug)
- 7: Schiene
- 8: Innenprofil
- 9: Innenwand
- 10: Führungsstruktur

- 11: Klemmeinrichtung
- 12: Klemmelement
- 13: Werkzeughalterung
- 14: Werkzeughalterung
- 15: Transfereinrichtung

- 16: Zug- und/oder Druckübertragungsmittel
- 17: Schienenöffnung
- 18: Kupplung
- 19: Kupplung
- 20: Stift

- 21: Antrieb
- 22: Shuttle
- 23: Biegewerkzeugspeicher

## Patentansprüche

1. Beschickungsvorrichtung (2) zum Beschicken einer Biegepresse (1) mit Biegewerkzeugen (5, 6), umfassend:
- zumindest eine Werkzeughalterung (13, 14) mit einer ein Innenprofil (8) aufweisenden Schiene (7) zum Aufnehmen und Verschieben eines Biegewerkzeuges (5, 6), wobei zumindest eine Innenwand (9) der Schiene (7) eine sich in Längsrichtung der Schiene (7) erstreckende Führungsstruktur (10) ausbildet; und
- zumindest eine durch einen Antrieb (21) antreibbare Transfereinrichtung (15) zum Verschieben eines Biegewerkzeuges (5, 6) innerhalb der Werkzeughalterung (13, 14) und/oder zwischen der Werkzeughalterung (13, 14) der Beschickungsvorrichtung (2) und einer Werkzeughalterung (3, 4) einer Biegepresse (1),
**dadurch gekennzeichnet, dass** zumindest ein Abschnitt der Transfereinrichtung (15) durch die in der Schiene (7) ausgebildete Führungsstruktur (10) geführt ist, wobei die in der Beschickungsvorrichtung (2) eingesetzten Biegewerkzeuge (5, 6) in derselben Schiene (7) gehalten werden, in der auch die Transfereinrichtung (15) bzw. ein Abschnitt der Transfereinrichtung (15) eingesetzt bzw. gehalten ist.

2. Beschickungsvorrichtung nach Anspruch 1, **dadurch gekennzeichnet, dass** die Transfereinrichtung (15) entlang der Führungsstruktur (10), parallel zur Längserstreckung der Schiene (7), verschiebbar und in der Richtung senkrecht zur Längserstreckung der Schiene (7), in der Richtung vom Schieneninneren zur Schienenöffnung hin, durch die Führungsstruktur (10) gehalten ist, und/oder dass das Biegewerkzeug (5, 6) in der Schiene (7) durch dieselbe Führungsstruktur (10) gehalten wird, durch die der zumindest eine Abschnitt der Transfereinrichtung (15) geführt ist.

3. Beschickungsvorrichtung nach einem der vorhergehenden Ansprüche, **dadurch gekennzeichnet, dass** die Führungsstruktur (10) durch eine Verbreiterung des Innenprofils (8) der Schiene (7) in Bezug auf die Schienenöffnung (17) gebildet wird, und/oder dass die Führungsstruktur (10) zumindest eine, in einer Innenwand (9) der Schiene (7) verlaufende Nut umfasst, wobei vorzugsweise die Führungsstruktur (10) durch zumindest zwei einander gegenüberliegende Nuten gebildet wird, die in gegenüberliegenden Innenwänden (9) der Schiene (7) ausgebildet sind.

4. Beschickungsvorrichtung nach einem der vorhergehenden Ansprüche, **dadurch gekennzeichnet, dass** die Führungsstruktur (10) durch diskrete Führungselemente gebildet ist, die von einer Innenwand (9) ins Innere der Schiene (7) vorragen und in Längsrichtung der Schiene (7) verteilt angeordnet sind, wobei vorzugsweise die Beschickungsvorrichtung (2) eine Klemmeinrichtung (11) zum Klemmen des Biegewerkzeuges (5, 6) in der Schiene (7) aufweist und die diskreten Führungselemente durch antreibbare Klemmelemente (12) der Klemmeinrichtung (11) gebildet sind.

5. Beschickungsvorrichtung nach einem der vorhergehenden Ansprüche, **dadurch gekennzeichnet, dass** der durch die Führungsstruktur (10) geführte Abschnitt der Transfereinrichtung (15) ein längliches, vorzugsweise flexibles Zug- und/oder Druckübertragungsmittel (16) ist, insbesondere ein Band, ein Seil, ein Stab oder eine Kette, wobei vorzugsweise das Zug- und/oder Druckübertragungsmittel (16) breiter ist als die Schienenöffnung (17) und/oder als der in die Schiene (7) ragende Abschnitt des Biegewerkzeuges (5, 6).

6. Beschickungsvorrichtung nach Anspruch 5, **dadurch gekennzeichnet, dass** das in der Führungsstruktur (10) geführte Zug- und/oder Druckübertragungsmittel (16) zu einem überwiegenden Teil, vorzugsweise zur Gänze innerhalb der Schiene (7) verläuft.

7. Beschickungsvorrichtung nach einem der vorhergehenden Ansprüche, **dadurch gekennzeichnet, dass** die Transfereinrichtung (15) ein Shuttle (22) umfasst, das durch die in der Schiene (7) ausgebildete Führungsstruktur (10) geführt ist, wobei vorzugsweise das Shuttle (22) zumindest ein funktionelles Bauteil, wie eine Kupplung, einen Sensor zur Detektion eines Biegewerkzeuges, eine Beleuchtungseinrichtung, etc., umfasst und/oder das Shuttle (22) selbstfahrend ausgebildet ist, wobei der Antrieb (21) in oder an dem Shuttle (22) angeordnet ist.

8. Beschickungsvorrichtung nach Anspruch 7, **dadurch gekennzeichnet, dass** das Shuttle (22) an einem seiner Enden mit dem Zug- und/oder Druckübertragungsmittel (16) verbunden ist und an seinem anderen Ende eine lösbare Kupplung (18) zum Anbinden eines Biegewerkzeuges (5, 6) aufweist, wobei vorzugsweise die Kupplung (18) eine mechanische Kupplung, eine magnetische Kupplung oder eine Ansaugvorrichtung ist.

9. Beschickungsvorrichtung nach einem der vorhergehenden Ansprüche, **gekennzeichnet durch** eine Vielzahl von Werkzeughalterungen (13, 14), die einen Biegewerkzeugspeicher (23) bilden, wobei vorzugsweise die Werkzeughalterungen (13, 14) einzeln oder in einem zusammenwirkenden Verbund relativ zur Transfereinrichtung (15) bewegbar sind und/oder der Biegewerkzeugspeicher (23) in Form eines Regales, einer Drehscheibe, einer Schiebebühne, einer Trommel, eines Paternosteraufzuges und/oder eines oder mehrerer Racks ausgebildet ist.

10. Beschickungsvorrichtung nach einem der vorhergehenden Ansprüche, **dadurch gekennzeichnet, dass** die Beschickungsvorrichtung (2) ein Werkzeugwechsler zum Auswechseln von einem oder mehreren in einer Biegepresse (1) eingesetzten Biegewerkzeugen (5, 6) ist.

11. Beschickungsvorrichtung nach einem der vorhergehenden Ansprüche, **gekennzeichnet durch** zumindest zwei Werkzeughalterungen (13, 14), wobei eine Werkzeughalterung (13) die Oberwerkzeughalterung und die andere Werkzeughalterung (14) die Unterwerkzeughalterung bildet, wobei vorzugsweise die Transfereinrichtung (15), die in der Schiene (7) einer der Werkzeughalterungen (13) geführt ist, eine Kupplung (19) zum Anbinden eines in der anderen Werkzeughalterung (14) eingesetzten Biegewerkzeuges (6) aufweist.

12. Beschickungsvorrichtung nach einem der vorhergehenden Ansprüche, **dadurch gekennzeichnet, dass** die Beschickungsvorrichtung (2) zumindest zwei Werkzeughalterungen, die in Richtung quer zur Längsrichtung ihrer Schienen (7) nebeneinander angeordnet sind, wobei sich ihre Schienen (7) in dieselbe Richtung öffnen, und zumindest eine weitere Werkzeughalterung, deren Schiene (7) der Schiene (7) einer der nebeneinander angeordneten Werkzeughalterungen gegenüberliegt, aufweist.

13. Beschickungsvorrichtung nach Anspruch 12, **dadurch gekennzeichnet, dass** zumindest eine der Werkzeughalterungen in einer Richtung verschiebbar ist, die quer, vorzugsweise im Wesentlichen senkrecht zur Längsrichtung ihrer Schiene (7) und quer, vorzugsweise im Wesentlichen senkrecht zur Richtung, in die sich ihre Schiene (7) öffnet, steht, wobei vorzugsweise die beiden nebeneinander angeordneten Werkzeughalterungen auf einer gemeinsamen Plattform gelagert sind oder eine gemeinsame Plattform bilden, die relativ zur weiteren Werkzeughalterung verschiebbar ist.

14. Beschickungsvorrichtung nach einem der vorhergehenden Ansprüche, **dadurch gekennzeichnet, dass** die Beschickungsvorrichtung (2) zumindest zwei, vorzugsweise unabhängig voneinander ansteuerbare Transfereinrichtungen (15) umfasst, wobei vorzugsweise eine Transfereinrichtung (15) der Oberwerkzeughalterung und eine Transfereinrichtung (15) der Unterwerkzeughalterung zugeordnet ist.

15. Biegepresse (1) umfassend:
- zumindest eine Werkzeughalterung (3, 4) mit einer ein Innenprofil (8) aufweisenden Schiene (7) zum Aufnehmen und Verschieben eines Biegewerkzeuges (5, 6), wobei zumindest eine Innenwand (9) der Schiene (7) eine sich in Längsrichtung der Schiene (7) erstreckende Führungsstruktur (10) ausbildet; und
- zumindest eine durch einen Antrieb (21) antreibbare Transfereinrichtung (15) zum Verschieben eines Biegewerkzeuges (5, 6) innerhalb der Werkzeughalterung (3, 4),
**dadurch gekennzeichnet, dass** zumindest ein Abschnitt der Transfereinrichtung (15) durch die in der Schiene (7) ausgebildete Führungsstruktur (10) geführt ist, wobei die in der Biegepresse (1) eingesetzten Biegewerkzeuge (5, 6) in derselben Schiene (7) gehalten werden, in der auch die Transfereinrichtung (15) bzw. ein Abschnitt der Transfereinrichtung (15) eingesetzt bzw. gehalten ist.

16. Biegepresse nach Anspruch 15, **dadurch gekennzeichnet, dass** die Transfereinrichtung (15) entlang der Führungsstruktur (10), parallel zur Längserstreckung der Schiene (7), verschiebbar und in der Richtung senkrecht zur Längserstreckung der Schiene (7), in der Richtung vom Schieneninneren zur Schienenöffnung hin, durch die Führungsstruktur (10) gehalten ist, und/oder dass das Biegewerkzeug (5, 6) in der Schiene (7) durch dieselbe Führungsstruktur (10) gehalten wird, durch die der zumindest eine Abschnitt der Transfereinrichtung (15) geführt ist.

17. Biegepresse nach Anspruch 15 oder 16, **dadurch gekennzeichnet, dass** die Führungsstruktur (10) durch eine Verbreiterung des Innenprofils (8) der Schiene (7) in Bezug auf die Schienenöffnung (17) gebildet wird und/oder dass die Führungsstruktur (10) zumindest eine, in einer Innenwand (9) der Schiene (7) verlaufende Nut umfasst, wobei vorzugsweise die Führungsstruktur (10) durch zumindest zwei einander gegenüberliegende Nuten gebildet wird, die in gegenüberliegenden Innenwänden (9) der Schiene (7) ausgebildet sind.

18. Biegepresse nach einem der Ansprüche 15 bis 17, **dadurch gekennzeichnet, dass** die Führungsstruktur (10) durch diskrete Führungselemente gebildet ist, die von einer Innenwand (9) ins Innere der Schiene (7) vorragen und in Längsrichtung der Schiene (7) verteilt angeordnet sind, wobei vorzugsweise die Biegepresse (1) eine Klemmeinrichtung (11) zum Klemmen des Biegewerkzeuges (5, 6) in der Schiene (7) aufweist und die diskreten Führungselemente durch antreibbare Klemmelemente (12) der Klemmeinrichtung (11) gebildet sind.

19. Biegepresse nach einem der Ansprüche 15 bis 18, **dadurch gekennzeichnet, dass** der durch die Führungsstruktur (10) geführte Abschnitt der Transfereinrichtung (15) ein längliches, vorzugsweise flexibles Zug- und/oder Druckübertragungsmittel (16) ist, insbesondere ein Band, ein Seil, ein Stab oder eine Kette, wobei vorzugsweise das Zug- und/oder Druckübertragungsmittel (16) breiter ist als die Schienenöffnung (17) und/oder als der in die Schiene (7) ragende Abschnitt des Biegewerkzeuges (5, 6).

20. Biegepresse nach Anspruch 19, **dadurch gekennzeichnet, dass** das in der Führungsstruktur (10) geführte Zug- und/oder Druckübertragungsmittel (16) zu einem überwiegenden Teil, vorzugsweise zur Gänze innerhalb der Schiene (7) verläuft.

21. Biegepresse nach einem der Ansprüche 15 bis 20, **dadurch gekennzeichnet, dass** die Transfereinrichtung (15) ein Shuttle (22) umfasst, das durch die in der Schiene (7) ausgebildete Führungsstruktur (10) geführt ist, wobei vorzugsweise das Shuttle (22) zumindest ein funktionelles Bauteil, wie eine Kupplung, einen Sensor zur Detektion eines Biegewerkzeuges, eine Beleuchtungseinrichtung, etc., umfasst und/oder das Shuttle (22) selbstfahrend ausgebildet ist, wobei der Antrieb (21) in oder an dem Shuttle (22) angeordnet ist.

22. Biegepresse nach Anspruch 21, **dadurch gekennzeichnet, dass** das Shuttle (22) an einem seiner Enden mit dem Zug- und/oder Druckübertragungsmittel (16) verbunden ist und an seinem anderen Ende eine lösbare Kupplung (18) zum Anbinden eines Biegewerkzeuges (5, 6) aufweist, wobei vorzugsweise die Kupplung (18) eine mechanische Kupplung, eine magnetische Kupplung oder eine Ansaugvorrichtung ist.

23. Biegepresse nach einem der Ansprüche 15 bis 22, **gekennzeichnet durch** zumindest zwei Werkzeughalterungen (3, 4), wobei eine Werkzeughalterung (3) die Oberwerkzeughalterung und die andere Werkzeughalterung (4) die Unterwerkzeughalterung bildet, wobei vorzugsweise die Transfereinrichtung (15), die in der Schiene (7) einer der Werkzeughalterungen (3) geführt ist, eine Kupplung (19) zum Anbinden eines in der anderen Werkzeughalterung (4; 14) eingesetzten Biegewerkzeuges (6) aufweist.

24. Biegepresse nach einem der Ansprüche 15 bis 23, **dadurch gekennzeichnet, dass** die Biegepresse (1) zumindest zwei Werkzeughalterungen (4), die in Richtung quer zur Längsrichtung ihrer Schienen (7) nebeneinander angeordnet sind, wobei sich ihre Schienen (7) in dieselbe Richtung öffnen, und zumindest eine weitere Werkzeughalterung (3), deren Schiene (7) der Schiene (7) einer der nebeneinander angeordneten Werkzeughalterungen (4) gegenüberliegt, aufweist.

25. Biegepresse nach Anspruch 24, **dadurch gekennzeichnet, dass** zumindest eine der Werkzeughalterungen (4) in einer Richtung verschiebbar ist, die quer, vorzugsweise im Wesentlichen senkrecht zur Längsrichtung ihrer Schiene (7) und quer, vorzugsweise im Wesentlichen senkrecht zur Richtung, in die sich ihre Schiene (7) öffnet, steht, wobei vorzugsweise die beiden nebeneinander angeordneten Werkzeughalterungen (4) auf einer gemeinsamen Plattform gelagert sind oder eine gemeinsame Plattform bilden, die relativ zur weiteren Werkzeughalterung (3) verschiebbar ist.

26. Biegepresse nach einem der Ansprüche 15 bis 25, **dadurch gekennzeichnet, dass** die Biegepresse (1) zumindest zwei, vorzugsweise unabhängig voneinander ansteuerbare Transfereinrichtungen (15) umfasst, wobei vorzugsweise eine Transfereinrichtung (15) der Oberwerkzeughalterung (3) und eine Transfereinrichtung (15) der Unterwerkzeughalterung (4) zugeordnet ist.

27. Verfahren zum Beschicken einer Biegepresse (1) mit Biegewerkzeugen (5, 6) und/oder zum Auswechseln von einem oder mehreren in einer Biegepresse (1) eingesetzten Biegewerkzeugen (5, 6) mit einer Beschickungsvorrichtung (2), wobei ein oder mehrere Biegewerkzeuge (5, 6) durch eine Transfereinrichtung (15) zwischen der Werkzeughalterung (13, 14) der Beschickungsvorrichtung (2) und der Werkzeughalterung (3, 4) der Biegepresse (1) verschoben werden, **dadurch gekennzeichnet, dass** die Biegepresse (1) nach einem der Ansprüche 15 bis 26 und/oder die Beschickungsvorrichtung (2) nach einem der Ansprüche 1 bis 14 ausgebildet ist/sind, wobei vorzugsweise das Biegewerkzeug (5, 6) in der Schiene (7) der Werkzeughalterung (3, 4) der Biegepresse (1) und/oder in der Schiene (7) der Werkzeughalterung (13, 14) der Beschickungsvorrichtung (2) durch dieselbe Führungsstruktur (10) gehalten wird, durch die der zumindest eine Abschnitt der Transfereinrichtung (15) bewegt wird.

28. Anordnung einer Biegepresse (1) und einer daran gekoppelten Beschickungsvorrichtung (2) zum Beschicken der Biegepresse (1) mit Biegewerkzeugen (5, 6), **dadurch gekennzeichnet, dass** die Biegepresse (1) nach einem der Ansprüche 15 bis 26 und/oder die Beschickungsvorrichtung (2) nach einem der Ansprüche 1 bis 14 ausgebildet ist/sind.

## Claims

1. A feeding device (2) for feeding bending tools (5, 6) to a bending press (1), comprising:
- at least one tool holder (13, 14) with a rail (7), which has an inner profile (8), for receiving and displacing a bending tool (5, 6), wherein at least one inner wall (9) of the rail (7) forms a guide structure (10) extending in the longitudinal direction of the rail (7); and
- at least one transfer device (15), which can be driven by a drive (21) and serves for displacing a bending tool (5, 6) within the tool holder (13, 14) and/or between the tool holder (13, 14) of the feeding device (2) and a tool holder (3, 4) of a bending press (1), **characterized in that** at least a section of the transfer device (15) is guided by the guide structure (10) formed in the rail (7), wherein the bending tools (5, 6) inserted in the feeding device (2) are held in the same rail (7), in which also the transfer device (15) or a section of the transfer device (15) is inserted and/or held.

2. The feeding device according to claim 1, **characterized in that** the transfer device (15) can be displaced along the guide structure (10) parallel to the longitudinal extent of the rail (7) and is held by the guide structure (10) in the direction extending perpendicular to the longitudinal extent of the rail (7), namely in the direction from the rail interior toward the rail opening, and/or that the bending tool (5, 6) is held in the rail (7) by the same guide structure (10), by means of which the at least one section of the transfer device (15) is guided.

3. The feeding device according to one of the preceding claims, **characterized in that** the guide structure (10) is formed by a widening of the inner profile (8) of the rail (7) in relation to the rail opening (17) and/or that the guide structure (10) comprises at least one groove extending in an inner wall (9) of the rail (7), wherein the guide structure (10) preferably is formed by at least two opposing grooves arranged in opposing inner walls (9) of the rail (7).

4. The feeding device according to one of the preceding claims, **characterized in that** the guide structure (10) is formed by discrete guide elements, which protrude from an inner wall (9) into the interior of the rail (7) and are distributed in the longitudinal direction of the rail (7), wherein preferably the feeding device (2) comprises a clamping device (11) for clamping the bending tool (5, 6) in the rail (7) and the discrete guide elements are formed by drivable clamping elements (12) of the clamping device (11).

5. The feeding device according to one of the preceding claims, **characterized in that** the section of the transfer device (15), which is guided by the guide structure (10), is an elongate, preferably flexible pull and/or push transmitting means (16), particularly a belt, a cable, a rod or a chain, wherein preferably the pull and/or push transmitting means (16) is wider than the rail opening (17) and/or than the section of the bending tool (5, 6) protruding into the rail (7).

6. The feeding device according to claim 5, **characterized in that** the pull and/or push transmitting means (16), which is guided in the guide structure (10), extends mainly within the rail (7), preferably in its entirety.

7. The feeding device according to one of the preceding claims, **characterized in that** the transfer device (15) comprises a shuttle (22), which is guided by the guide structure (10) formed in the rail (7), wherein preferably the shuttle (22) comprises at least one functional component such as a coupling, a sensor for detecting a bending tool, an illuminating device, etc. and/or the shuttle (22) is designed in a self-propelled manner, in which case the drive (21) is arranged in or on the shuttle (22).

8. The feeding device according to claim 7, **characterized in that** the shuttle (22) is connected to the pull and/or push transmitting means (16) on one of its ends and comprises a releasable coupling (18) for connecting a bending tool (5, 6) on its other end, wherein the coupling (18) preferably is a mechanical coupling, a magnetic coupling or a suction device.

9. The feeding device according to one of the preceding claims, **characterized by** a plurality of tool holders (13, 14) that form a bending tool magazine (23), wherein preferably the tool holders (13, 14) can be moved relative to the transfer device (15) individually or in the form of a cooperating unit and/or the bending tool magazine (23) is designed in the form of a shelf, a turntable, a transfer table, a drum, a paternoster elevator and/or one or more racks.

10. The feeding device according to one of the preceding claims, **characterized in that** the feeding device (2) is a tool changer for changing one or more bending tools (5, 6) inserted in a bending press (1).

11. The feeding device according to one of the preceding claims, **characterized by** at least two tool holders (13, 14), wherein one tool holder (13) forms the upper tool holder and the other tool holder (14) forms the lower tool holder, and wherein preferably the transfer device (15), which is guided in the rail (7) of one of the tool holders (13), comprises a coupling (19) for connecting a bending tool (6) inserted in the other tool holder (14).

12. The feeding device according to one of the preceding claims, **characterized in that** the feeding device (2) comprises at least two tool holders, which are arranged adjacent to one another in the direction extending transverse to the longitudinal direction of their rails (7), wherein their rails (7) open in the same direction, and wherein the feeding device furthermore comprises at least one additional tool holder, the rail (7) of which lies opposite of the rail (7) of one of the adjacently arranged tool holders.

13. The feeding device according to claim 12, **characterized in that** at least one of the tool holders can be displaced in a direction, which extends transverse, preferably essentially perpendicular, to the longitudinal direction of its rail (7) and transverse, preferably essentially perpendicular, to the direction in which its rail (7) opens, wherein preferably the two adjacently arranged tool holders are mounted on a common platform or form a common platform, which can be displaced relative to the additional tool holder.

14. The feeding device according to one of the preceding claims, **characterized in that** the feeding device (2) comprises at least two transfer devices (15), which preferably can be activated independently of one another, wherein preferably one transfer device (15) is assigned to the upper tool holder and one transfer device (15) is assigned to the lower tool holder.

15. A bending press (1) comprising:
- at least one tool holder (3, 4) with a rail (7), which has an inner profile (8), for receiving and displacing a bending tool (5, 6), wherein at least one inner wall (9) of the rail (7) forms a guide structure (10) extending in the longitudinal direction of the rail (7); and
- at least one transfer device (15), which can be driven by a drive (21) and serves for displacing a bending tool (5, 6) within the tool holder (3, 4),
**characterized in that** at least a section of the transfer device (15) is guided by the guide structure (10) formed in the rail (7), wherein the bending tools (5, 6) inserted in the bending press (1) are held in the same rail (7), in which also the transfer device (15) or a section of the transfer device (15) is inserted or held.

16. The bending press according to claim 15, **characterized in that** the transfer device (15) can be displaced along the guide structure (10) parallel to the longitudinal extent of the rail (7) and is held by the guide structure (10) in the direction extending perpendicular to the longitudinal extent of the rail (7), namely in the direction from the rail interior toward the rail opening, and/or that the bending tool (5, 6) is held in the rail (7) by the same guide structure (10), by means of which the at least one section of the transfer device (15) is guided.

17. The bending press according to claim 15 or 16, **characterized in that** the guide structure (10) is formed by a widening of the inner profile (8) of the rail (7) in relation to the rail opening (17) and/or that the guide structure (10) comprises at least one groove extending in an inner wall (9) of the rail (7), wherein preferably the guide structure (10) is formed by at least two opposing grooves arranged in opposing inner walls (9) of the rail (7).

18. The bending press according to one of claims 15 to 17, **characterized in that** the guide structure (10) is formed by discrete guide elements, which protrude from an inner wall (9) into the interior of the rail (7) and are distributed in the longitudinal direction of the rail (7), wherein preferably the bending press (1) comprises a clamping device (11) for clamping the bending tool (5, 6) in the rail (7) and the discrete guide elements are formed by drivable clamping elements (12) of the clamping device (11).

19. The bending press according to one of claims 15 to 18, **characterized in that** the section of the transfer device (15), which is guided by the guide structure (10), is an elongate, preferably flexible pull and/or push transmitting means (16), particularly a belt, a cable, a rod or a chain, wherein preferably the push and/or pull transmitting means (16) is wider than the rail opening (17) and/or than the section of the bending tool (5, 6) protruding into the rail (7).

20. The bending press according to claim 19, **characterized in that** the pull and/or push transmitting means (16), which is guided in the guide structure (10), extends mainly within the rail (7), preferably in its entirety.

21. The bending press according to one of claims 15 to 20, **characterized in that** the transfer device (15) comprises a shuttle (22), which is guided by the guide structure (10) formed in the rail (7), wherein the shuttle (22) preferably comprises at least one functional component such as a coupling, a sensor for detecting a bending tool, an illuminating device, etc. and/or the shuttle (22) is designed in a self-propelled manner, in which case the drive (21) is arranged in or on the shuttle (22).

22. The bending press according to claim 21, **characterized in that** the shuttle (22) is connected to the pull and/or push transmitting means (16) on one of its ends and comprises a releasable coupling (18) for connecting a bending tool (5, 6) on its other end, wherein preferably the coupling (18) is a mechanical coupling, a magnetic coupling or a suction device.

23. The bending press according to one of claims 15 to 22, **characterized by** at least two tool holders (3, 4), wherein one tool holder (3) forms the upper tool holder and the other tool holder (4) forms the lower tool holder, and wherein preferably the transfer device (15), which is guided in the rail (7) of one of the tool holders (3), comprises a coupling (19) for connecting a bending tool (6) inserted in the other tool holder (4; 14).

24. The bending press according to one of claims 15 to 23, **characterized in that** the bending press (1) comprises at least two tool holders (4), which are arranged adjacent to one another in the direction extending transverse to the longitudinal direction of their rails (7), wherein their rails (7) open in the same direction, and wherein the bending press furthermore comprises at least one additional tool holder (3), the rail (7) of which lies opposite of the rail (7) of one of the adjacently arranged tool holders (4).

25. The bending press according to claim 24, **characterized in that** at least one of the tool holders (4) can be displaced in a direction, which extends transverse, preferably essentially perpendicular, to the longitudinal direction of its rail (7) and transverse, preferably essentially perpendicular, to the direction in which its rail (7) opens, wherein preferably the two adjacently arranged tool holders (4) are mounted on a common platform or form a common platform, which can be displaced relative to the additional tool holder (3).

26. The bending press according to one of claims 15 to 25, **characterized in that** the bending press (1) comprises at least two transfer devices (15), which preferably can be controlled independently of one another, wherein preferably one transfer device (15) is assigned to the upper tool holder (3) and one transfer device (15) is assigned to the lower tool holder (4).

27. A method for feeding bending tools (5, 6) to a bending press (1) and/or for changing one or more bending tools (5, 6) inserted in a bending press (1) by means of a feeding device (2), wherein one or more bending tools (5, 6) are displaced between the tool holder (13, 14) of the feeding device (2) and the tool holder (3, 4) of the bending press (1) by a transfer device (15), **characterized in that** the bending press (1) is designed in accordance with one of claims 15 to 26 and/or the feeding device (2) is designed in accordance with one of claims 1 to 14, wherein preferably the bending tool (5, 6) is held in the rail (7) of the tool holder (3, 4) of the bending press (1) and/or in the rail (7) of the tool holder (13, 14) of the feeding device (2) by the same guide structure (10), by means of which the at least one section of the transfer device (15) is moved.

28. An arrangement of a bending press (1) and a feeding device (2), which is coupled to the bending press and serves for feeding bending tools (5, 6) to the bending press (1), **characterized in that** the bending press (1) is designed in accordance with one of claims 15 to 26 and/or the feeding device (2) is designed in accordance with one of claims 1 to 14.

## Revendications

1. Dispositif de chargement (2) pour l'alimentation d'une presse plieuse (1) avec des outils de pliage (5, 6), comprenant :
- au moins un porte-outil (13, 14) avec un rail (7) comprenant un profilé interne (8) pour le logement et le coulissement d'un outil de pliage (5, 6), au moins une paroi interne (9) du rail (7) formant une structure de guidage (10) s'étendant dans la direction longitudinale du rail (7) ; et
- au moins un dispositif de transfert (15) pouvant être entraîné par un dispositif d'entraînement (21), pour le coulissement d'un outil de pliage (5, 6) à l'intérieur du porte-outil (13, 14) et/ou entre le porte-outil (13, 14) du dispositif de chargement (2) et un porte-outil (3, 4) d'une presse plieuse (1),
**caractérisé en ce qu'**au moins une portion du dispositif de transfert (15) est guidé par la structure de guidage (10) formée dans le rail (7), les outils de pliage (5, 6) insérés dans le dispositif de chargement (2) étant maintenus dans le même rail (7) dans lequel est également inséré ou maintenu le dispositif de transfert (15) ou une portion du dispositif de transfert (15).

2. Dispositif de chargement selon la revendication 1, **caractérisé en ce que** le dispositif de transfert (15) peut coulisser le long de la structure de guidage (10), parallèlement à l'extension longitudinale du rail (7) et est maintenu perpendiculairement à l'extension longitudinale du rail (7), dans la direction de l'intérieur du rail vers l'ouverture du rail, par la structure de guidage (10), et/ou **en ce que** l'outil de pliage (5, 6) est maintenu dans le rail (7) par la même structure de guidage (10) que celle à l'aide de laquelle l'au moins une portion du dispositif de transfert (15) est guidée.

3. Dispositif de chargement selon l'une des revendications précédentes, **caractérisé en ce que** la structure de guidage (10) est constituée d'un élargissement du profilé interne (8) du rail (7) par rapport à l'ouverture du rail (17) et/ou **en ce que** la structure de guidage (10) comprend au moins une rainure s'étendant dans une paroi interne (9) du rail (7), de préférence la structure de guidage (10) étant constituée d'au moins deux rainures opposées qui sont réalisées dans des parois internes (9) opposées du rail (7).

4. Dispositif de chargement selon l'une des revendications précédentes, **caractérisé en ce que** la structure de guidage (10) est constituée d'éléments de guidage discrets, qui dépassent d'une paroi interne (9) vers l'intérieur du rail (7) et sont disposés de manière répartie dans la direction longitudinale du rail (7), de préférence le dispositif de chargement (2) comprenant un dispositif de serrage (11) pour le serrage de l'outil de pliage (5, 6) dans le rail (7) et les éléments de guidage discrets étant constitués d'éléments de serrage (12), pouvant être entraînés, du dispositif de serrage (11).

5. Dispositif de chargement selon l'une des revendications précédentes, **caractérisé en ce que** la portion du dispositif de transfert (15) guidée par la structure de guidage (10) est un moyen de transmission de traction et/ou de pression (16) allongé, de préférence flexible, plus particulièrement une bande, un câble, une tige ou une chaîne, de préférence le moyen de transmission de traction et/ou de pression (16) étant plus large que l'ouverture du rail (17) et/ou que la portion, dépassant dans le rail (7) de l'outil de pliage (5, 6).

6. Dispositif de chargement selon la revendication 5, **caractérisé en ce que** le moyen de transmission de traction et/ou de pression (16) guidé dans la structure de guidage (10) s'étend en grande partie, de préférence entièrement, à l'intérieur du rail (7).

7. Dispositif de chargement selon l'une des revendications précédentes, **caractérisé en ce que** le dispositif de transfert (15) comprend une navette (22) qui est guidée par la structure de guidage (10) réalisée dans le rail (7), de préférence la navette (22) comprenant au moins un composant fonctionnel, comme un couplage, un capteur pour la détection d'un outil de pliage, un dispositif d'éclairage, etc. et/ou la navette (22) étant conçue de manière auto-propulsée, le dispositif d'entraînement (21) étant disposé dans ou sur la navette (22).

8. Dispositif de chargement selon la revendication 7, **caractérisé en ce que** la navette (22) est reliée, à une de ses extrémités, avec le moyen de transmission de traction et/ou de pression (16) et, à une autre extrémité, comprend un couplage (18) amovible pour le raccordement d'un outil de pliage (5, 6), de préférence le couplage (18) étant un couplage mécanique, un couplage magnétique ou un dispositif d'aspiration.

9. Dispositif de chargement selon l'une des revendications précédentes, **caractérisé par** une pluralité de porte-outils (13, 14) qui constituent un réservoir d'outils de pliage (23), de préférence les porte-outils (13, 14) pouvant être déplacés individuellement ou dans un ensemble interactif, par rapport au dispositif de transfert (15) et/ou le réservoir d'outils de pliage (23) est réalisé sous la forme d'une étagère, d'un disque rotatif, d'un châssis transbordeur, d'un tambour, d'un ascenseur continu et/ou d'un ou de plusieurs racks.

10. Dispositif de chargement selon l'une des revendications précédentes, **caractérisé en ce que** le dispositif de chargement (2) est un changeur d'outil pour le changement d'un ou plusieurs outils de pliage (5, 6) utilisés dans une presse plieuse (1).

11. Dispositif de chargement selon l'une des revendications précédentes, **caractérisé par** au moins deux porte-outils (13, 14), un porte-outil (13) constituant le porte-outil supérieur et l'autre porte-outil (14) constituant le porte-outil inférieur, de préférence le dispositif de transfert (15) qui est guidée dans le rail (7) d'un des porte-outils (13), comprenant un couplage (19) pour le raccordement d'un outil de pliage (6) inséré dans l'autre porte-outil (14).

12. Dispositif de chargement selon l'une des revendications précédentes, **caractérisé en ce que** le dispositif de chargement (2) comprend au moins deux porte-outils, qui sont juxtaposés dans une direction transversale par rapport à la direction longitudinale de leurs rails (7), leurs rails (7) s'ouvrant dans la même direction et au moins un autre porte-outil, dont le rail (7) est opposé au rail (7) d'un des porte-outils juxtaposés.

13. Dispositif de chargement selon la revendication 12, **caractérisé en ce qu'**au moins un des porte-outils peut être coulissé dans une direction qui est transversale, de préférence globalement perpendiculaire à la direction longitudinale de son rail (7) et transversale, de préférence globalement perpendiculaire à la direction dans laquelle son rail (7) s'ouvre, de préférence les deux porte-outils juxtaposés étant logés sur une plateforme commune ou formant une plate-forme commune, qui peut être coulissée par rapport à l'autre porte-outil.

14. Dispositif de chargement selon l'une des revendications précédentes, **caractérisé en ce que** le dispositif de chargement (2) comprend au moins deux dispositifs de transfert (15), de préférence contrôlables indépendamment entre eux, de préférence un dispositif de transfert (15) correspondant au porte-outil supérieur et un dispositif de transfert (15) correspondant au porte-outil inférieur.

15. Presse plieuse (1) comprenant :
- au moins un porte-outil (3, 4) avec un rail (7) comprenant un profilé interne (8) pour le logement et le coulissement d'un outil de pliage (5, 6), au moins une paroi interne (9) du rail (7) formant une structure de guidage (10) s'étendant dans la direction longitudinale du rail (7) ; et
- au moins un dispositif de transfert (15) pouvant être entraîné par un dispositif d'entraînement (21), pour le coulissement d'un outil de pliage (5, 6) à l'intérieur du porte-outil (3, 4),
**caractérisé en ce qu'**au moins une portion du dispositif de transfert (15) est guidée par la structure de guidage (10) réalisée dans le rail (7), les outils de pliage (5, 6) insérés dans la presse plieuse (1) étant maintenus dans le même rail (7) que celui dans lequel le dispositif de transfert (15) ou une portion du dispositif de transfert (15) est inséré ou maintenu.

16. Presse plieuse selon la revendication 15, **caractérisée en ce que** le dispositif de transfert (15) est maintenu de manière coulissante le long de la structure de guidage (10), parallèlement à l'extension longitudinale du rail (7), et dans la direction perpendiculaire à l'extension longitudinale du rail (7), dans la direction de l'intérieur du rail vers l'ouverture du rail, par la structure de guidage (10) et/ou **en ce que** l'outil de pliage (5, 6) est maintenu dans le rail (7) par la même structure de guidage (10) que celle à l'aide de laquelle l'au moins une portion du dispositif de transfert (15) est guidée.

17. Presse plieuse selon la revendication 15 ou 16, **caractérisée en ce que** la structure de guidage (10) est constituée d'un élargissement du profilé interne (8) du rail (7) par rapport à l'ouverture du rail (17) et/ou **en ce que** la structure de guidage (10) comprend au moins une rainure s'étendant dans une paroi interne (9) du rail (7), de préférence la structure de guidage (10) étant constituée d'au moins deux rainures opposées qui sont réalisées dans des parois internes (9) opposées du rail (7).

18. Presse plieuse selon l'une des revendications 15 à 17, **caractérisée en ce que** la structure de guidage (10) est constituée d'éléments de guidage discrets, qui dépassent d'une paroi interne (9) vers l'intérieur du rail (7) et sont disposés de manière répartie dans la direction longitudinale du rail (7), de préférence la presse plieuse (1) comprenant un dispositif de serrage (11) pour le serrage de l'outil de pliage (5, 6) dans le rail (7) et les éléments de guidage discrets étant constitués d'éléments de serrage (12), pouvant être entraînés, du dispositif de serrage (11).

19. Presse plieuse selon l'une des revendications 15 à 18, **caractérisée en ce que** la portion du dispositif de transfert (15) guidée par la structure de guidage (10) est un moyen de transmission de traction et/ou de pression (16) allongé, de préférence flexible, plus particulièrement une bande, un câble, une tige ou une chaîne, de préférence le moyen de transmission de traction et/ou de pression (16) étant plus large que l'ouverture du rail (17) et/ou que la portion, dépassant dans le rail (7) de l'outil de pliage (5, 6).

20. Presse plieuse selon la revendication 19, **caractérisée en ce que** le moyen de transmission de traction et/ou de pression (16) guidé dans la structure de guidage (10) s'étend en grande partie, de préférence entièrement, à l'intérieur du rail (7).

21. Presse plieuse selon l'une des revendications 15 à 20, **caractérisée en ce que** le dispositif de transfert (15) comprend une navette (22) qui est guidée par la structure de guidage (10) réalisée dans le rail (7), de préférence la navette (22) comprenant au moins un composant fonctionnel, comme un couplage, un capteur pour la détection d'un outil de pliage, un dispositif d'éclairage, etc. et/ou la navette (22) étant conçue de manière auto-propulsée, le dispositif d'entraînement (21) étant disposé dans ou sur la navette (22).

22. Presse plieuse selon la revendication 21, **caractérisée en ce que** la navette (22) est reliée, à une de ses extrémités, avec le moyen de transmission de traction et/ou de pression (16) et comprend, à une autre extrémité, un couplage (18) amovible pour le raccordement d'un outil de pliage (5, 6), de préférence le couplage (18) étant un couplage mécanique, un couplage magnétique ou un dispositif d'aspiration.

23. Presse plieuse selon l'une des revendications 15 à 22, **caractérisée par** au moins deux porte-outils (3, 4), un porte-outil (3) constituant le porte-outil supérieur et l'autre porte-outil (4) constituant le porte-outil inférieur, de préférence le dispositif de transfert (15) qui est guidée dans le rail (7) d'un des porte-outils (3), comprenant un couplage (19) pour le raccordement d'un outil de pliage (6) inséré dans l'autre porte-outil (4 ; 14).

24. Presse plieuse selon l'une des revendications 15 à 23, **caractérisée en ce que** la presse plieuse (1) comprend au moins deux porte-outils (4), qui sont juxtaposés dans une direction transversale par rapport à la direction longitudinale de leurs rails (7), leurs rails (7) s'ouvrant dans la même direction, et au moins un autre porte-outil (3), dont le rail (7) est opposé au rail (7) d'un des porte-outils (4) juxtaposés.

25. Presse plieuse selon la revendication 24, **caractérisée en ce qu'**au moins un des porte-outils peut être coulissé dans une direction qui est transversale, de préférence globalement perpendiculaire, à la direction longitudinale de son rail (7) et transversale, de préférence globalement perpendiculaire à la direction dans laquelle son rail (7) s'ouvre, de préférence les deux porte-outils (4) juxtaposés étant logés sur une plateforme commune ou formant une plate-forme commune, qui peut être coulissée par rapport à l'autre porte-outil (3).

26. Presse plieuse selon l'une des revendications 15 à 25, **caractérisée en ce que** la presse plieuse (1) comprend au moins deux dispositifs de transfert (15), de préférence contrôlables indépendamment entre eux, de préférence un dispositif de transfert (15) correspondant au porte-outil supérieur (3) et un dispositif de transfert (15) correspondant au porte-outil inférieur (4).

27. Procédé de chargement d'une presse plieuse (1) avec des outils de pliage (5, 6) et/ou pour le changement d'un ou de plusieurs outils de pliage (5, 6) utilisés dans une presse plieuse (1) avec un dispositif de chargement (2), un ou plusieurs des outils de pliage (5, 6) étant coulissés par un dispositif de transfert (15) entre le porte-outil (13, 14) du dispositif de chargement (2) et le porte-outil (3, 4) de la presse plieuse (1), **caractérisé en ce que** la presse plieuse (1) est conçue selon l'une des revendications 15 à 26 et/ou le dispositif de chargement (2) est conçu selon l'une des revendications 1 à 14, de préférence l'outil de pliage (5, 6) étant maintenu dans le rail (7) du porte-outil (3, 4) de la presse plieuse (1) et/ou dans le rail (7) du porte-outil (13, 14) du dispositif de chargement (2) par la même structure de guidage (10) que celle à l'aide de laquelle une portion du dispositif de transfert (15) est déplacée.

28. Disposition d'une presse plieuse (1) et d'un dispositif de chargement (2) qui y est couplé pour le chargement de la presse plieuse (1) avec des outils de pliage (5, 6), **caractérisée en ce que** la presse plieuse (1) est conçue selon l'une des revendications 15 à 26 et/ou le dispositif de chargement (2) est conçu selon l'une des revendications 1 à 14.
